(19) Europäisches Patentamt
European Patent Office
Office européen des brevets

(11) **EP 1 896 796 B1**

(12) **EUROPEAN PATENT SPECIFICATION**

(45) Date of publication and mention
of the grant of the patent:
**13.05.2009 Bulletin 2009/20**

(21) Application number: **06773797.3**

(22) Date of filing: **21.06.2006**

(51) Int Cl.:
*G01C 21/16* (2006.01)     *G01C 19/58* (2006.01)

(86) International application number:
**PCT/US2006/024368**

(87) International publication number:
**WO 2007/002327 (04.01.2007 Gazette 2007/01)**

(54) **METHOD FOR COMBINING CONTINUOUS AND DISCONTINUOUS INERTIAL INSTRUMENT MEASUREMENTS AND INERTIAL NAVIGATION SYSTEM USING THE SAME**

VERFAHREN ZUM KOMBINIEREN VON KONTINUIERLICHEN UND DISKONTINUIERLICHEN TRÄGHEITSINSTRUMENTMESSUNGEN UND TRÄGHEITSNAVIGATIONSSYSTEM DAMIT

PROCEDE PERMETTANT DE COMBINER DES MESURES D'INSTRUMENT INERTIEL CONTINUES ET DISCONTINUES ET SYSTEME DE NAVIGATION INERTIEL UTILISANT LEDIT PROCEDE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.06.2005 US 692951 P**

(43) Date of publication of application:
**12.03.2008 Bulletin 2008/11**

(73) Proprietor: **Northrop Grumman Guidance and Electronics Company, Inc.
Los Angeles, CA 90067 (US)**

(72) Inventors:
• **HUDDLE, James, R.**
**Chatsworth, CA 91311 (US)**
• **TAZARTES, Daniel, A.**
**West Hills, CA 91304 (US)**

(74) Representative: **Mackenzie, Andrew Bryan et al
Scott & York
Intellectual Property Limited
45 Grosvenor Road
St. Albans
Hertfordshire AL1 3AW (GB)**

(56) References cited:
US-A- 4 992 656     US-A- 5 274 232
US-A1- 2004 102 900     US-A1- 2005 125 141

• GUSTAVSON T L ET AL: "ROTATION SENSING WITH A DUAL ATOM-INTERFEROMETER SAGNAC GYROSCOPE" CLASSICAL AND QUANTUM GRAVITY, INSTITUTE OF PHYSIC PUBLISHING, BRISTOL, GB, vol. 17, no. 12, 16 August 1999 (1999-08-16), pages 2385-2398, XP008001272 ISSN: 0264-9381

## Description

Applicant claims priority based on Provisional Application serial number No. 60/692,951 filed June 22, 2005.

Background of the Invention

This invention relates generally to inertial navigation systems. This invention relates particularly to a navigation system in which continuous measurements made with a first system are corrected using measurements from a higher accuracy second system, which may function to produce discontinuous measurements. Still more particularly, this invention relates to correction of measurements made by a conventional navigation system that includes gyroscopes and accelerometers by comparing them with measurements made with atom optic instruments.

Conventional inertial navigation systems typically include mechanical devices and optical interferometric devices. Mechanical inertial sensors include devices such as spinning rotor gyroscopes, pendulums and Coriolis force devices. Optical interferometric inertial sensors include Sagnac effect devices that are typically ring laser or fiber optic interferometers.

Recent developments in atom optic instruments provide an opportunity to improve the accuracy of inertial navigation systems. Atom optic instruments use matter wave interferometry involving laser cooled atoms and molecules in applications such as accelerometers, gyroscopes, gravimeters and gradiometers. Such instruments use quantum mechanical interference of matter waves, or deBroglie waves, associated with particles of non-zero mass. The sensitivity of interferometric instruments depends inversely upon the wavelength of the interfering waves. Therefore, because the deBroglie wavelengths are much shorter than optical wavelengths, atom optic instruments have an inherent sensitivity that is greatly improved over that of instruments based on optical interferometry.

The development of very high accuracy inertial sensors, such as those implemented with atom optic instruments provides the opportunity for high accuracy inertial navigation. The term "atom optic" is used because optical signals are used to control and manipulate matter, such as a beam of cesium atoms. In some cases, sensors of this type have limited bandwidth and noncontinuous, but periodic, outputs.

A further complication is that the output of the atom optic instruments is sensitive not only to acceleration but to rotation as well. Separating the acceleration sensitivity from the rotational sensitivity can be complex.

US-A-2004/102900 and US-A-2005/125141 describe inertial navigation systems using the combination of a signal output from inertial sensors with a signal output from a GPS receiver. Estimated parameter values are produced and processed by an adaptive filter to provide corrections to the estimated parameter values.

Summary of the Invention

This invention provides a method for combining the outputs of two types of inertial navigation instruments to improve accuracy while providing continuous navigation. The present invention takes advantage of the nature of the atom optic instrument output to provide an enhanced ability to navigate without forcing a direct extraction of acceleration and angular rate information while mitigating the effect of conventional inertial sensor drifts during the "down-time" of the atom optic instrument.

The invention is based on the general concept that an atom optic instrument establishes a positional reference in inertial space using a "cloud" of ultra-cold atoms but does so only for a finite period of time. Should it be capable of doing so continuously and have an "infinite" case dimension, then it would be possible to determine position change from a starting position at any point in time simply by measuring the position change in nominally orthogonal directions. However, the instrument has finite case size and the atom "cloud" has a finite lifetime. Thus changes in position are determined across finite intervals with the result that the double-difference of these position changes is what is actually measured. Also, during the time required to prepare the atom "clouds" no measurements can be made. Thus measurements are obtained only across finite, non-contiguous time intervals. An additional feature of the instrument is that measurements are taken in case-fixed axes, and the measurements obtained are a function of orientation at different times in the measurement cycle. Instantaneous velocity, normally also a desired output from a navigation system is not readily available using such an instrument. The present invention makes use of the nature of the measurements which represent position changes across specific measurement periods as observed in the appropriate coordinate frame to enhance inertial navigation capability as compared to a direct extraction of acceleration and angular rate information.

Brief Description of the Drawings

FIG. 1 is a block diagram showing a conventional navigation system, a set of atom optic instruments and a central processing unit that may be included in the invention;

FIG. 2 shows the basic structure of an atom optic interferometer that may be included in the set of atom optic instruments of FIG.1;

FIG. 3 shows coordinate systems that may be used for inertial navigation; and

FIG. 4 is a functional block diagram showing integration of measurements output from an atom optic instrument with a conventional inertial sensing instruments.

Detailed Description of the Invention

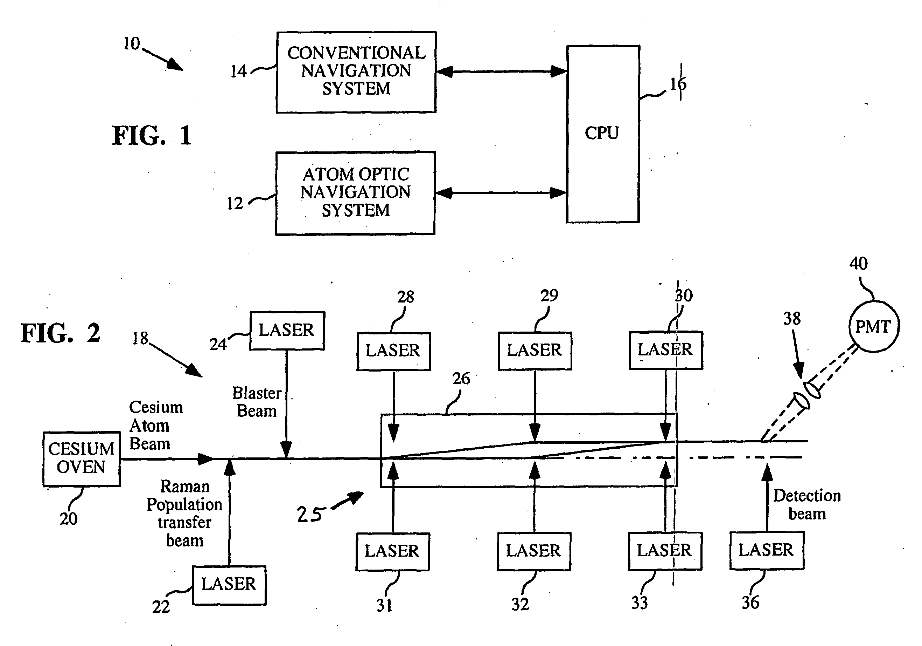

Referring to FIG. 1, the present invention is directed to an inertial navigation system 10 in which highly accurate inertial sensors, such as an atom optic instruments 12 are used to provide periodic corrections to a conventional navigation system 14 to provide a continuously operating navigation system having improved accuracy.

The atom optic instruments 12 provides periodic, high accuracy inertial measurements to a central processing unit (CPU) 16. The CPU 16 also receives navigation information from the conventional navigation system 14. The CPU processes signals received from the atom optic instruments 12 and from the conventional navigation system 14 in a Kalman filter to provide a correction to data received from the conventional navigation system 14.

Atom optic instruments are disclosed in U. S. Patent Nos. 5,274,232, issued December 28, 1993 to Chu et al. and 4,992,656 issued February 12, 1991 to Clauser.

As disclosed in U. S. Patent No. 5,274,232 an atom optic instrument typically includes an evacuated chamber having a plurality of windows. Cooling laser beams are admitted into the chamber through a first group of the windows. The cooling laser beams converge on a target region within the cell and are included in a laser cooling system. As is known in the art a laser cooling system reduces the velocity, and hence the temperature of an atom, by reducing its momentum as the atom absorbs photons in Raman transitions. The cooling laser beams cooperate with a magnetic field to trap atoms, typically Cesium atoms, within the target region for a time of sufficient duration to permit measurements to be made.

FIG. 2 illustrates an atom optic interferometer 18 that may be included in the set of atom optic instruments 12. The invention should not be understood to be limited to any particular high accuracy navigation system and should not be understood to be limited to the specific atom optic interferometer 18 structure shown in FIG. 2.

Still referring to FIG. 2, a Cesium oven 20 produces a beam of Cesium atoms that is collimated by two 1 mm diameter apertures (not shown) and then cooled using laser cooling techniques. A laser 22 provides a Raman population transfer beam to the Cesium atoms, which undergo stimulated Raman transitions between the Cs $6S_{1/2}$, F = 3, $m_F$ = 0 and the $6S_{1/2}$, F = 4, $m_F$ = 0 magnetic field insensitive ground state hyperfine levels. The resulting atomic beam has a most probable longitudinal velocity of 290 m/s and a transverse velocity of 10 cm/s. State preparation of the Cesium atoms is accomplished by first optically pumping the atoms into the F = 4, $m_F$ = 0 level. The atoms are then transferred from the F = 4, $m_F$ = 0 level to the F = 3, $m_F$ = 0 level with a Doppler insensitive $\pi$ Raman pulse: A laser 24 provides a blaster beam that removes atoms that remain in the F = 4 state from the Cesium beam.

After state preparation is completed, atoms enter a magnetically shielded case 25 that encloses an interrogation region 26. Magnetic shielding may be provided by passing electric current through a pair of conducting coils (not shown). In the interrogation region 26 three pairs of counterpropagating laser beams are used to drive additional Raman transitions. The laser beams are oriented to be perpendicular to the atomic beam in a horizontal plane and are provided by lasers 28-33. The Cesium atoms enter the interrogation region 26 in the $|F = 3, m_F = 0; \mathbf{p}_0\rangle$ state, where $\mathbf{p}_0$ is the initial momentum per atom. A first set of $\pi/2$ Raman pulses from the lasers 28 and 31 puts most of the Cesium atoms in a superposition of the $|F = 3, m_F = 0; \mathbf{p}_0\rangle$ state and the $|F = 4, m_F = 0; \mathbf{p}_0 + 2\bar{h}\mathbf{k}\rangle$ state where $2\bar{h}\mathbf{k}$ is the recoil momentum of each atom that has absorbed two photons and experienced a Raman transition. This recoil momentum corresponds to a 7 mm/s velocity transverse to the initial velocity of the Cesium atoms, which causes these atoms to separate from atoms remaining in their initial states upon entering the interrogation region as the atoms continue their trajectories. In a free-flight distance of about 1 m, the wave packets corresponding to the two atomic states separate by about 23 $\mu$m.

Next the atoms pass through a pair of $\pi$ Raman beams provided by the lasers 29 and 32, which interact with the Cesium atom states and exchange the two ground states and momenta, which reverses the direction of the atoms that were deflected by the $\pi/2$ Raman beam. The atom beams then combine after traveling another meter where a second pair of $\pi/2$ Raman pulses overlaps the two wave packets. Atoms that made the transition from the F = 3 to F = 4 state are detected by a resonant probe laser beam from the laser 33 that is tuned to the $6S_{1/2}$, F = 4 $\rightarrow$ $6S_{1/2}$, F = 5 cycling transition. A lens system 36 focuses the fluorescence resulting from this transition onto a photomultiplier tube, which produces a corresponding electrical signal.

Dividing the input beam of Cesium atoms into two beams that are subsequently combined as described above produces a Mach-Zehnder interferometer, which is well-known in both bulk optics and fiber optics. Rotation of the atom optic interferometer about an axis perpendicular to the plane defined by the two paths followed by the wave packets produces phase shift between the wave packets in accordance with the Sagnac effect. The prior art is replete with examples of ring laser and fiber optic sensors that use the Sagnac effect to measure rotations.

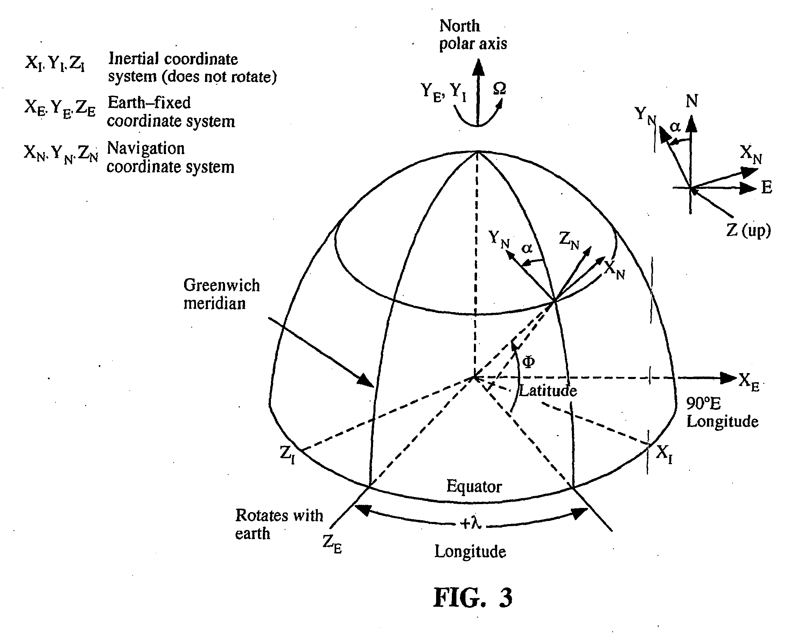

FIG. 3 shows a navigation coordinate system having orthogonal axes $X_N$, $Y_N$, $Z_N$ that are transported with a vehicle relative to the earth where $X_N$, $Y_N$ are local-level at the wander angle $\alpha$ relative to the east and north geodetic axes and $Z_N$ is along the local vertical fixed in an object such as an aircraft or a missile. FIG. 3 also shows an earth-fixed coordinate system having orthogonal axes $X_E$, $Y_E$, $Z_E$ that are fixed relative to the earth. An inertial coordinate system has orthogonal axes $X_I$, $Y_I$, $Z_I$ that are fixed in inertial space. In a typical navigation situation, the navigation coordinate system moves relative to the earth-fixed coordinate system while at the same time, the earth-fixed coordinate system moves relative to the inertial coordinate system. Inertial navigation typically involves transforming measurements made in one coordinate system such as the vehicle body coordinate system into one or more of the three coordinate systems shown.

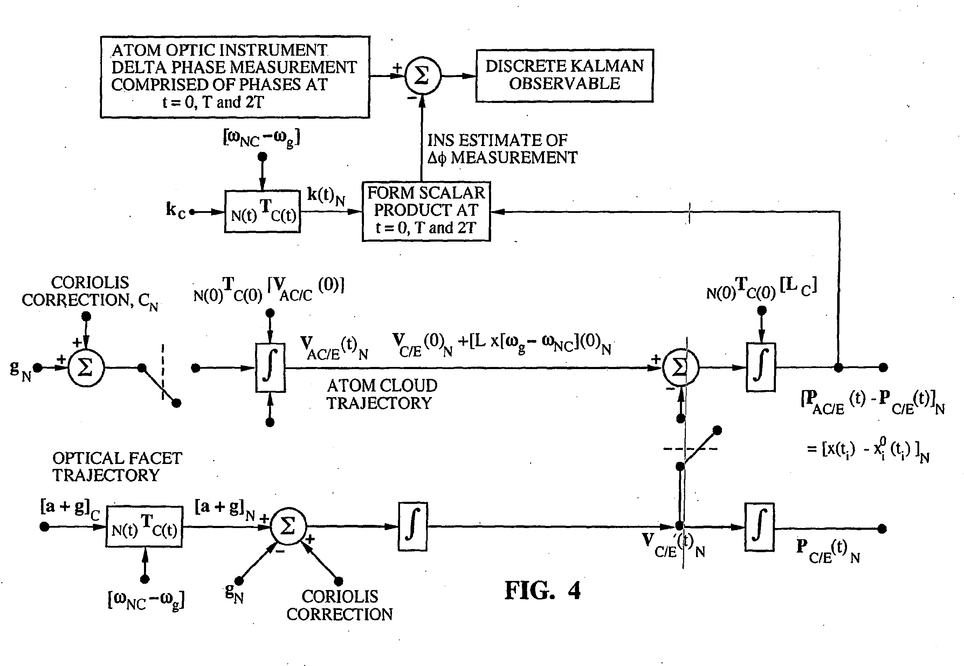

FIG. 4 is a functional block diagram of the invention, which is based on assuming that the periodic measurement from the atom optic (AO) instrument is a phase difference measurement of the form:

$$\Delta\varphi = \left[\varphi_1 - 2\varphi_2 + \varphi_3\right], \quad\quad\quad (1)$$

where the phases $\varphi_i$($i = 1,2,3$) are estimated as the scalar product of the k vector, which is the propagation direction for the laser field with the vectors representing the difference in position $\mathbf{x}_P(t)$ of the atom cloud falling under the influence of gravity and its initial velocity and the position of a reference point fixed to the atom optic instrument case $\mathbf{x}_R(t)$, such reference point being determined by the optical configuration of the instrument, at the times $t_i = t_0$, $t_0 + T$, $t_0 + 2T$, where $i = 1, 2, 3$ and where 2T is a fraction of a second. The phase may be written explicitly as:

$$\varphi_i = \mathbf{k}(t_i) \bullet \left[\mathbf{x}_P(t_i) - \mathbf{x}_R(t_i)\right]. \quad\quad\quad (2)$$

The atom optic instrument case 25 has an orthogonal reference set of axes denoted $[\mathbf{x}_C,\mathbf{y}_C,\mathbf{z}_C]$. The origin of this reference frame is the case-fixed reference point referred to above. The point of release of the atom cloud during the measurement periods is assumed to be fixed in the atom optic instrument case reference axes and is denoted by the fixed "lever arm."

$$\mathbf{L} = \left[L_{xc}, L_{yc}, L_{zc}\right]. \quad\quad\quad (3)$$

The vector k is fixed in the case 25 of the atom optic instrument with coordinates $[\mathbf{k}_{xc},\mathbf{k}_{yc},\mathbf{k}_{zc}]$ for all time indices i.

The navigation coordinate system maintained by the conventional inertial navigation system (INS) can be defined to be coincident with the local East, North and Vertical [E, N, V] axes at the present position (latitude and longitude of the INS with respect to the earth. The vertical can be defined to be normal to the ellipsoidal model of the earth. The origin of this navigation coordinate system is a point with respect to which the measurements of force by the conventional accelerometers and angular rotation by the conventional gyros are referred. In general this origin will be separated from the case-fixed reference point of the atom optic instrument by a fixed lever arm that can be expressed in the case coordinate axes of the atom optic instrument or in an orthogonal reference set of axes defined by the conventional inertial instruments. These two orthogonal reference coordinate systems will be related to each other by a fixed transformation.

To simplify the following description, it is assumed that the transformation between the coordinate axes defined by the INS sensors and the atom optic instrument case 25 is the identity matrix. It is further assumed that the origins of these two coordinate systems are identical such that the position of the reference point of the atom optic instrument will also be the reference point for navigation using the conventional INS measurements.

The following equation is a simplified representation of the trajectory of the atom cloud with respect to an inertial frame during the measurement period:

$$\mathbf{x}_P(t) = \mathbf{x}_0 + \mathbf{V}t + \left[\frac{1}{2}\right]\mathbf{g}t^2 \quad\quad\quad (4)$$

where:

$\mathbf{x}_o$     is the initial position of the atom cloud;

**V**     is the initial velocity of the atom cloud with respect to the atom optic case 25 where it is assumed for simplification that the atom optic case 25 has zero velocity with respect to inertial space; and

**g**     is the acceleration of gravity for a simplified flat earth, "no rotation" approximation. These simplifying assumptions are now relaxed for the practical situation below.

The frame of reference for the trajectory of the atom cloud can be the reference navigation coordinates $[\mathbf{X_N}, \mathbf{Y_N}, \mathbf{Z_N}]$ defined in FIG. 3 above in which the trajectory of the reference point of the atom optic instrument is expressed or the atom optic case coordinate axes $[\mathbf{x_c}, \mathbf{y_c}, \mathbf{z_c}]$. Without loss of generality the wander angle $\alpha$ can be set to zero such that the $X_N$ axis points east, E and the $Y_N$ axis points north, N. The trajectories of the atom cloud and the optical facet can be expressed in either reference frame using a transformation $_N\mathbf{T}_C$ between them. The transformation $_N\mathbf{T}_C$ is continuously computed by the INS using the difference of the conventional gyro measured angular rates $\omega_g$ with respect to inertial space measured along case coordinates, and the INS computed angular rate of the navigation coordinates with respect to inertial space, $\omega_{Nc}$ expressed in case coordinates.

Since the relative position of the atom cloud upon release at t = 0, is known in the case coordinates as is the k-vector, then the phase $\varphi_1$ is a fixed number known a' priori, namely,

$$\varphi_1 = \mathbf{k} \bullet \mathbf{L} = \left[\mathbf{k}_{xc}, \mathbf{k}_{yc}, \mathbf{k}_{zc}\right] \bullet \left[\mathbf{L}_{xc}, \mathbf{L}_{yc}, \mathbf{L}_{zc}\right]. \tag{5}$$

FIG. 4 shows how to develop an expression of the atom cloud trajectory in navigation coordinate axes. The gravity vector $\mathbf{g_N}$ is fixed in the navigation coordinate axes along the local vertical axis, $Z_N$ except for gravity disturbances with respect to the earth. The gravity disturbance vector is ignored at this point but can be readily introduced into the mechanization later if it is known. The variable $\mathbf{g_N}$ is defined to be the value of gravity along the local vertical at a current position of the vehicle transporting the INS. The gravity vector $\mathbf{g_N}$ is the combination of the acceleration of gravity due to mass attraction and centripetal acceleration due to earth rotation $\Omega$ with respect to inertial space.

The initial velocity $\mathbf{V_c}$ of the atom cloud relative to the atom optic case 25 upon release is defined in case coordinate axes as:

$$\mathbf{V}_C = \left[V_X, V_Y, V_Z\right] \tag{6}$$

The velocity $\mathbf{V_{c/E}}$ of the origin of the atom optic instrument case axes relative to the earth expressed in the navigation coordinate axes as a function of time is defined as:

$$\mathbf{V}_{C/E} = \left[V_{XN}(t), V_{YN}(t), V_{ZN}(t)\right] \tag{7}$$

The relative velocity of the point of release of the atom cloud with respect to the origin (reference point) of the atom optic instrument case 25 with respect to the earth is expressed as a vector cross product of the lever arm between the two points **L**, and the relative angular rate of the case 25 with respect to the earth $(\omega_g - \omega_{Nc})$. This term is written as $\mathbf{L} \times (\omega_g - \omega_{Nc})$ as shown in FIG. 4.

Consequently the initial velocity $\mathbf{V}_{Ac/E}(0)_N$ of the atom cloud with respect to the earth expressed in the navigation coordinate axes is

$$\mathbf{V}_{AC/E}(0) = {}_N T_C(0) + V_{C/E}(0)_N + \mathbf{L} \times \left(\omega_{NC}(0) - \omega_g(0)\right), \tag{8}$$

where $\omega_{Nc}$ is the angular rate of the navigation coordinate axes with respect to the earth but expressed in case coordinates and $\omega_g$ is the angular rate of the case 25 with respect to inertial space measured in case coordinates.

The subsequent position of the atom cloud with respect to the earth expressed in the navigation coordinate axes is then estimated using the conventional inertial navigation solution information over the 2T measurement period as:

$$\mathbf{P}_{AC/N}(t)_N = \int \left\{ \int [\mathbf{g}_N + \mathbf{C}_N] d\mu + \mathbf{V}_{AC/E}(0)_N \right\} d\nu + \mathbf{P}_{AC/E}(0)_N \qquad (9)$$

The initial position of the atom cloud with respect to the earth is obtained from the initial position of the reference point of the atom optic instrument $\mathbf{P}_{C/E}(0)_N$ with respect to the earth in the navigation coordinate axes plus the lever arm L between the two positions expressed in the navigation coordinate axes.

$$\mathbf{P}_{AC/E}(0)_N = \mathbf{P}_{C/E}(0)_N +_N T_C(0)[\mathbf{L}]_C. \qquad (10)$$

Since $\mathbf{g}_N$ represents acceleration with respect to inertial space expressed in the navigation coordinate axes, a Coriolis correction $\mathbf{C}_N$, is required to obtain the time derivative of velocity with respect to the earth with respect to the navigation coordinate axes in which the integration takes place. This Coriolis term in the navigation system coordinate frame is expressed as:

$$\mathbf{C}_N = -\left[\omega_{NC} + \mathbf{\Omega}\right]_N \times \mathbf{V}_{AC/E}(t) \qquad (11)$$

where:
$\Omega$ is the Earth's Rate of Rotation with respect to inertial Space, and
$\omega_{Nc}$ is the rate of rotation of the navigation coordinate axes with respect to inertial space.
Therefore, the velocity of the atom cloud relative to the earth is estimated as:

$$\mathbf{V}_{AC/E}(t)_N = \int [\mathbf{g}_N + \mathbf{C}_N] d\mu + \mathbf{V}_{AC/E}(0)_N. \qquad (12)$$

From the above, the INS provides the navigation solution for the reference point of the atom optic instrument $\mathbf{P}_{C/E}(t)_N$ from its initial position $\mathbf{P}_{C/E}(0)_N$ at the start of the measurement period, 2T.
FIG. 4 also shows an expression for the k-vector in navigation coordinate axes. Since the transformation between the navigation coordinate axes and the atom optic case coordinate axes is known, the k-vectors at the times T and 2T in the navigation coordinate axes are:

$$\mathbf{k}_2(T)_N =_N T_C(T) \lfloor \mathbf{k}_{xc}, \mathbf{k}_{yc}, \mathbf{k}_{zc} \rfloor \qquad (13)$$

and

$$\mathbf{k}_3(2T)_N =_N T_C(2T) \lfloor \mathbf{k}_{xc}, \mathbf{k}_{yc}, \mathbf{k}_{zc} \rfloor \qquad (14)$$

The phase angles may be estimated as

$$\varphi_2 = \mathbf{k}_2(T)_N \bullet \left[ \mathbf{P}_{AC/E}(T) - \mathbf{P}_{OF/E}(T) \right]_N \qquad (15)$$

and

$$\varphi_3 = \mathbf{k}_3(2T)_N \bullet \left[\mathbf{P}_{AC/E}(T) - \mathbf{P}_{OF/E}(T)\right]_N \qquad\qquad (16)$$

A block diagram depicting the information flow for this mechanization is shown in FIG. 4. The Kalman filter processes a Kalman observation that may be expressed as

$$\text{Kalman observation} = \Delta\varphi_{AO\ instrument} - \Delta\varphi_{Estimated}. \qquad\qquad (17)$$

which is the difference of the atom optic instrument measurement $\Delta\phi_{AO\ instrument}$, and the estimate of this measurement $\Delta\phi_{Estimated}$, that is computed using the information from the conventional inertial navigation solution.

The means for correction of the high bandwidth conventional navigation solution obtained with conventional inertial instruments is also shown in FIG. 4. The periodic discontinuous measurement of the phase difference provided by the atom optic instrument $\Delta\varphi_{AO\ Instrument}$ is compared with an estimate of the phase difference computed using the conventional inertial navigation solution measurements $\Delta\varphi_{Estimated}$. The difference of these two measurements is the discrete observation that is processed by a Kalman filter to correct all error states modeled in the Kalman filter. These error states pertain to all significant errors in the conventional inertial navigation solution and the conventional inertial instruments and also all significant error states in the atom optic instrument measurements. For example, the Kalman filter may provide corrections to the conventional inertial gyro and accelerometer biases, to attitude errors in $_NT_C$, to velocity errors, position errors, and other modeled error sources.

The embodiment of the invention described is meant as an example. Other similar embodiments can also be arrived at by those skilled in the art. For example, the method described could be used with sensors having a different form of output as that given in equations (1) and (2). In this case the conventional navigation solution would be used to compute an estimate of the appropriate mathematical form of the atom optic instrument measurement. Also, navigation could be performed in a wide variety of coordinate systems.

## Claims

1. A method for combining continuous signals output from a first inertial sensor (14) with discontinuous signals output from a second inertial sensor (12), comprising the steps of:

     using the first inertial sensor (14) to acquire continuous data with respect to a navigation frame of reference fixed with respect to the first inertial sensor (14) for a parameter used in inertial navigation;
     processing the continuous data to produce estimated values of the parameter;
     arranging the second inertial sensor (12) to acquire discontinuous data with respect to a case frame of reference indicative of the parameter with respect to a case (25) that contains the second inertial sensor (12);
     processing the discontinuous data to produce measurements of the parameter at selected times; and
     processing the estimated values of the parameter and the measurements of the parameter at selected times with a Kalman filter to provide corrections to the estimated values of the parameter at the selected times.

2. The method of claim 1, further comprising the step of arranging the second inertial sensor (12) to have a greater accuracy than the first inertial sensor (14).

3. The method of claim 1 further comprising the steps of:

     forming the second inertial sensor (12) to comprise an atom optic instrument (18) that is arranged to establish a positional reference in inertial space using a cloud of ultra-cold atoms that move within a case (25) for a finite time period;
     obtaining positional data in the navigation frame for the cloud of atoms as a function of time;
     determining a position vector for the atom cloud in the navigation reference frame at a time when the atom cloud is released into the case (25);
     forming a scalar product of the positional data in the navigation frame or the cloud of atoms as a function of time.

4. An inertial navigation system (10), comprising:

a central processing unit (16);

a first inertial sensor (14) arranged to provide a continuous signal indicative of a parameter to the central processing unit (16), the central processing unit (16) being arranged to process the continuous signal to obtain estimated values of the parameter; and

a second inertial sensor (12) arranged to provide discontinuous signal indicative of the parameter to the central processing unit (16), the central processing unit (16) being arranged to process the discontinuous signal to obtain measurements of the parameter at selected times, the central processing unit (16) being further arranged to process the estimated values of the parameter and the measurements of the parameter at selected times with a Kalman filter to provide corrections to the estimated values of the parameter at the selected times.

**Patentansprüche**

1. Verfahren zur Kombination kontinuierlicher Signale, die von einem ersten Trägheitssensor (14) abgegeben werden, mit diskontinuierlichen Signalen, die von einem zweiten Trägheitssensor (12) abgegeben werden, mit den folgenden Schritten:

Verwenden des ersten Trägheitssensors (14) zur Erfassung kontinuierlicher Daten bezüglich eines Navigations-Bezugsrahmens, der bezüglich des ersten Trägheitssensors (14) für einen bei der Trägheitsnavigation verwendeten Parameter festgelegt ist;
Verarbeiten der kontinuierlichen Daten zur Erzeugung von Schätzwerten des Parameters;
Anordnen des zweiten Trägheitssensors (12) derart, dass dieser diskontinuierliche Daten bezüglich eines Gehäuse-Bezugsrahmens erfasst, die den Parameter bezüglich eines Gehäuses (25) anzeigt, der den zweiten Trägheitssensor (12) enthält;
Verarbeiten der diskontinuierlichen Daten zur Erzeugung von Messungen des Parameters zu ausgewählten Zeiten; und
Verarbeiten der Schätzwerte des Parameters und der Messungen des Parameters zu ausgewählten Zeiten mit einem Kalman-Filter zur Lieferung von Korrekturen der Schätzwerte des Parameters zu den ausgewählten Zeiten.

2. Verfahren nach Anspruch 1, das weiterhin den Schritt der Anordnung des zweiten Trägheitssensors (12) derart umfasst, dass dieser eine größere Genauigkeit als der erste Trägheitssensor (14) aufweist.

3. Verfahren nach Anspruch 1, das weiterhin die folgenden Schritte umfasst:

Bilden des zweiten Trägheitssensors (12) derart, dass dieser ein atomoptisches Instrument (18) umfasst, das zur Ausbildung eines Positionsbezuges im Trägheitsraum unter Verwendung einer Wolke von ultrakalten Atomen angeordnet ist, die sich in einem Gehäuse (25) für eine endliche Zeitperiode bewegen;
Gewinnen von Positionsdaten in dem Navigationsrahmen für die Wolke von Atomen als eine Funktion der Zeit;
Bestimmen eines Positionsvektors für die Atomwolke in dem Navigations-Bezugsrahmen zu einer Zeit, zu der die Atomwolke in das Gehäuse (25) freigesetzt wird;
Bilden eines Skalarproduktes der Positionsdaten in dem Navigationsrahmen oder der Wolke von Atomen als eine Funktion der Zeit.

4. Trägheitsnavigationssystem (10) mit:

einer Zentralverarbeitungs-Einheit (16);
einem ersten Trägheitssensor (14), der zur Lieferung eines kontinuierlichen, einen Parameter anzeigenden Signals an die Zentralverarbeitungs-Einheit (16) angeordnet ist, wobei die Zentralverarbeitungs-Einheit (16) zur Verarbeitung des kontinuierlichen Signals zur Gewinnung von Schätzwerten des Parameters angeordnet ist; und
einem zweiten Trägheitssensor (12), der zur Lieferung eines diskontinuierlichen, den Parameter anzeigenden Signals an die Zentralverarbeitungseinheit (16) angeordnet ist, wobei die Zentralverarbeitungseinheit (16) zur Verarbeitung des diskontinuierlichen Signals zur Gewinnung von Messungen des Parameters zu ausgewählten Zeiten angeordnet ist, wobei die Zentralverarbeitungseinheit (16) weiterhin zur Verarbeitung der Schätzwerte des Parameters und der Messungen des Parameters zu ausgewählten Zeiten mit einem Kalman-Filter angeordnet ist, um Korrekturen der Schätzwerte des Parameters zu den ausgewählten Zeiten zu liefern.

**EP 1 896 796 B1**

**Revendications**

1. Procédé pour combiner des signaux continus délivrés par un premier capteur inertiel (14) avec des signaux discontinus délivrés par un deuxième capteur inertiel (12), comprenant les étapes consistant à :

   utiliser le premier capteur inertiel (14) pour acquérir des données continues en relation avec un cadre de navigation de référence fixe par rapport au premier capteur inertiel (14) pour un paramètre utilisé dans une navigation par inertie ;
   traiter les données continues pour produire des valeurs estimées du paramètre ;
   agencer le deuxième capteur inertiel (12) pour acquérir des données discontinues en relation avec un cadre de boîtier de référence indicatives du paramètre par rapport à un boîtier (25) qui contient le deuxième capteur inertiel (12) ;
   traiter les données discontinues pour produire des mesures du paramètre à des instants sélectionnés ; et
   traiter les valeurs estimées du paramètre et les mesures du paramètre à des instants sélectionnés par un filtre de Kalman pour apporter des corrections aux valeurs estimées du paramètre aux instants sélectionnés.

2. Procédé selon la revendication 1, comprenant en outre l'étape consistant à agencer le deuxième capteur inertiel (12) pour qu'il ait une plus grande précision que le premier capteur inertiel (14).

3. Procédé selon la revendication 1, comprenant en outre les étapes consistant à :

   former le deuxième capteur inertiel (12) pour qu'il comprenne un instrument d'optique atomique (18) qui est agencé pour établir une référence de position dans un espace inertiel en utilisant un nuage d'atomes ultra froids qui se déplacent dans un boîtier (25) pendant une période de temps finie ;
   obtenir des données de position dans le cadre de navigation pour le nuage d'atomes en fonction du temps ;
   déterminer un vecteur de position pour le nuage d'atomes dans le cadre de référence de navigation à un instant où le nuage d'atomes est libéré dans le boîtier (25) ;
   former un produit scalaire des données de position dans le cadre de navigation ou du nuage d'atomes en fonction du temps.

4. Système de navigation par inertie (10), comprenant :

   une unité centrale (16) ;
   un premier capteur inertiel (14) agencé pour fournir un signal continu indicatif d'un paramètre à l'unité centrale (16), l'unité centrale (16) étant agencée pour traiter le signal continu pour obtenir des valeurs estimées du paramètre ; et
   un deuxième capteur inertiel (12) agencé pour fournir un signal discontinu indicatif du paramètre à l'unité centrale (16), l'unité centrale (16) étant agencée pour traiter le signal discontinu pour obtenir des mesures du paramètre à des instants sélectionnés, l'unité centrale (16) étant en outre agencée pour traiter les valeurs estimées du paramètre et les mesures du paramètre à des instants sélectionnés par un filtre de Kalman pour apporter des corrections aux valeurs estimées du paramètre aux instants sélectionnés.

EP 1 896 796 B1

**FIG. 1**

10

14 — CONVENTIONAL NAVIGATION SYSTEM ⟷ CPU 16

12 — ATOM OPTIC NAVIGATION SYSTEM ⟷

**FIG. 2**

18

24 — LASER

28 — LASER  29 — LASER  30 — LASER

Blaster Beam

Cesium Atom Beam

26

40 — PMT

38

CESIUM OVEN 20

Raman Population transfer beam

25

22 — LASER

31 — LASER  32 — LASER  33 — LASER

Detection beam

36 — LASER

$X_I, Y_I, Z_I$   Inertial coordinate system (does not rotate)

$X_E, Y_E, Z_E$   Earth–fixed coordinate system

$X_N, Y_N, Z_N$   Navigation coordinate system

North polar axis

$Y_E, Y_I$   $\Omega$

N

$Y_N$   $\alpha$

$X_N$

E

Z (up)

$Y_N$   $\alpha$   $Z_N$

$X_N$

Greenwich meridian

$\Phi$

Latitude

$X_E$

90°E Longitude

$Z_I$

$X_I$

Equator

Rotates with earth

$Z_E$

$+\lambda$

Longitude

**FIG. 3**

EP 1 896 796 B1

EP 1 896 796 B1

ATOM OPTIC INSTRUMENT DELTA PHASE MEASUREMENT COMPRISED OF PHASES AT t = 0, T and 2T

$+$ $\Sigma$ $-$

DISCRETE KALMAN OBSERVABLE

$[\omega_{NC} - \omega_g]$

INS ESTIMATE OF $\Delta\phi$ MEASUREMENT

$k_C$

$N(t) \, T_{C(t)}$

$k(t)_N$

FORM SCALAR PRODUCT AT t = 0, T and 2T

CORIOLIS CORRECTION, $C_N$

$N(0) \, T_{C(0)} \, [V_{AC/C} \, (0)]$

$N(0) \, T_{C(0)} \, [L_C]$

$g_N$

$+$ $+$ $\Sigma$

$\int$

$V_{AC/E}(t)_N$

ATOM CLOUD TRAJECTORY

$V_{C/E}(0)_N + [L \times [\omega_g - \omega_{NC}](0)_N$

$+$ $\Sigma$ $-$

$\int$

$[P_{AC/E}(t) - P_{C/E}(t)]_N$

$= [x(t_i) - x_i^0(t_i)]_N$

OPTICAL FACET TRAJECTORY

$[a + g]_C$

$N(t) \, T_{C(t)}$

$[a + g]_N$

$+$ $\Sigma$ $-$ $+$

$\int$

$V_{C/E}'(t)_N$

$\int$

$P_{C/E}(t)_N$

$[\omega_{NC} - \omega_g]$

$g_N$

CORIOLIS CORRECTION

**FIG. 4**

**REFERENCES CITED IN THE DESCRIPTION**

**Patent documents cited in the description**

- US 60692951 B
- US 2004102900 A
- US 2005125141 A

- US 5274232 A, Chu
- US 4992656 A, Clauser